# EUROPÄISCHE PATENTANMELDUNG

(11) **EP 4 316 640 A1**
(43) Veröffentlichungstag der Anmeldung: **07.02.2024**
(21) Anmeldenummer: 22020370.7
(22) Anmeldetag: 03.08.2022
(51) Int. Cl.: B01J 8/02, B01J 8/04

(54) **VERFAHREN UND ANLAGE ZUR DURCHFÜHRUNG EINER KATALYTISCHEN GASPHASENREAKTION**

(71) Anmelder: Linde GmbH, 82049 Pullach (DE)
(72) Erfinder: Schödel, Nicole, 82049 Pullach (DE); Behrens, Axel, 82049 Pullach (DE); Müller-Thorwart, Ole, 82049 Pullach (DE); Peschel, Andreas, 82049 Pullach (DE)
(74) Vertreter: Fischer, Werner

(57) **Zusammenfassung**

Ein Verfahren zur Durchführung einer katalytischen Gasphasenreaktion, insbesondere einer Hochtemperaturreaktion zur Herstellung von Wasserstoff, insbesondere einer Dampfreformierung, wird vorgeschlagen, bei dem ein Prozessgas durch einen Katalysereaktor (100, 200) geführt wird, wobei der Katalysereaktor (100, 200) einen Druckbehälter (101) aufweist, in dem ein oder mehrere Katalysatorbetten (106-117) angeordnet sind, wobei durch das eine Katalysatorbett (106-117) oder durch zumindest eines der mehreren Katalysatorbetten (106-111) ein oder mehrere Heizelemente (11) geführt ist oder sind, das oder die elektrisch beheizt wird oder werden. Ein entsprechender Katalysereaktor (100, 200) wird ebenfalls vorgeschlagen.

## Beschreibung

Die Erfindung betrifft ein Verfahren und eine Anlage zur Durchführung einer katalytischen Gasphasenreaktion, insbesondere einer Hochtemperaturreaktion zur Herstellung von Wasserstoff, insbesondere einer Dampfreformierung.

### Hintergrund

Die Erzeugung von Wasserstoff erfolgt derzeit noch überwiegend auf Basis von Kohlenwasserstoffen, beispielsweise durch Dampfreformierung von Erdgas oder anderen kohlenwasserstoffhaltigen Einsatzstoffen (Steam Methan Reforming, SMR). Da derartige Verfahren einen beträchtlichen Kohlendioxid-Fußabdruck aufweisen, wird der bereitgestellte Wasserstoff auch als "grauer" Wasserstoff bezeichnet.

Im Zuge der Klimadiskussion und entsprechender regulatorischer Maßnahmen bekommt die Vermeidung und Rückgewinnung von Kohlendioxid zunehmend an Bedeutung. Eine langfristig angestrebte Lösung kann beispielsweise die Gewinnung von Wasserstoff mittels Elektrolyse umfassen, die bei Einsatz von erneuerbaren Energiequellen kohlendioxidneutral sein kann, so dass entsprechend hergestellter Wasserstoff auch als "grün" bezeichnet wird.

Zumindest bis zur wirtschaftlich erfolgreichen Realisierung von Verfahren zur Herstellung von "grünem" Wasserstoff können Brückentechnologien eingesetzt werden. Diese umfassen insbesondere die Rückgewinnung und Lagerung oder Verwendung von Kohlendioxid (engl. Carbon (Dioxide) Capture and Storage, CCS bzw. Carbon (Dioxide) Capture and Utilization, CCU). In diesem Fall wird entsprechender Wasserstoff auch als "blau" bezeichnet.

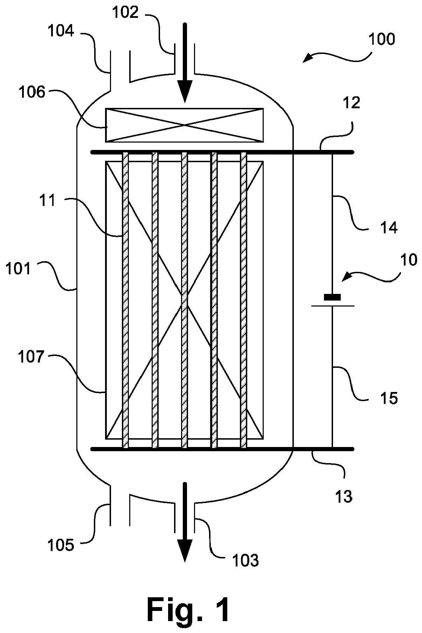

Entsprechende Ausgestaltungen von Dampfreformierungsverfahren sind in der europäischen Patentanmeldung 22020126.3 der Anmelderin beschrieben. Es wird dabei insbesondere auf die dortigen Figuren 1 bis 3 und die zugehörige Figurenbeschreibung in dieser Anmeldung Bezug genommen.

In den genannten Verfahren wird weiterhin eine beträchtliche Menge von Kohlendioxid in einer Wassergasshift und durch die Verbrennung fossiler Brennstoffe gebildet, und die Abtrennung sowie Lagerung bzw. Verwertung von Kohlendioxid ist nicht immer gewünscht bzw. erweist sich in bestimmten Fällen als aufwendig.

Die Entfernung von Kohlendioxid aus dem Prozessgas stellt dabei eine sehr konkurrenzfähige Lösung dar, erfordert jedoch immer noch eine (weitgehende) Dekarbonisierung des Brennstoffs, um Kohlendioxidemissionen im Rauchgas zu verringern oder zu vermeiden. Es ist zwar möglich, kohlenwasserstofffreie Brenngase wie Wasserstoff oder Ammoniak zu verwenden, allerdings ist die Bereitstellung solcher Brenngase typischerweise vergleichsweise kostenintensiv und aufwendig. Auch kann es bei diesen Brennstoffen zu vermehrter Stickoxidbildung kommen, was eine aufwendige Abgasnachbehandlung notwendig macht.

Daher besteht eine weitere, momentan in intensiver Entwicklung befindliche Alternative in der Beheizung der Katalysereaktoren mit elektrischem Strom, und vorzugsweise mit regenerativ erzeugtem Strom. Da hierbei auch weniger oder kein aufwendig in der Dampfreformierung erzeugter Wasserstoff verfeuert wird, können sich entsprechende Verfahren als deutlich effizienter erweisen, was die Ausbeute per eingesetztem Kohlenwasserstoff, beispielsweise Erdgas, angeht.

In der Patent- und Nichtpatentliteratur existiert eine Reihe von Ansätzen zur Beheizung entsprechender Katalysereaktoren. Neben einer direkten resistiven Beheizung des Katalysators selbst oder eines Trägers, auf den dieser beispielsweise durch eine Waschbeschichtung aufgetragen ist, können dabei auch resistive Heizelemente eingesetzt werden. Auch kann eine Überhitzung des Prozessgases vorgenommen werden, das dann mit erhöhter Temperatur durch das Katalysatorbett strömt.

Neben einer direkten Beheizung, bei der das Heizmittel, beispielsweise ein Heizelement, eine Heizmanschette oder ein resistiv beheizter Katalysatorträger in stofflichem Kontakt mit dem Prozessgas oder im Materialkontakt zu Reaktionsrohren, durch die das Prozessgas strömt, steht, kann auch eine indirekte elektrische Beheizung eingesetzt werden, wie unter anderem in der WO 2020/002326 A1 erläutert, aber bereits auch aus früheren Druckschriften bekannt.

Eine derartige indirekte elektrische Beheizung kann unter Verwendung von elektrischen Strahlungsheizelementen erfolgen, die zum Erhitzen auf die für die genannten Reaktionen erforderlichen hohen Temperaturen geeignet sind, wobei derartige Heizelemente derart angeordnet sind, dass diese nicht in direktem Kontakt mit den Reaktionsrohen stehen. Die Wärmeübertragung erfolgt dabei überwiegend oder ausschließlich in Form von Strahlungswärme.

Als weitere Alternative ist auch eine induktive Beheizung des Katalysators bzw. der Reaktionsrohre möglich, wie beispielsweise in der WO 2017/186437 A1 offenbart.

Die Verwendung von elektrischer Wärme ist für die Reformierung insgesamt von großem Vorteil, da auf diese Weise Rauchgas vermieden oder signifikant reduziert wird. Allerdings ist die direkte Widerstandsheizung der Reaktionsrohre in bestimmten Fällen wirtschaftlich nicht attraktiv, da sehr hohe Stromdichten aufgebracht werden müssen, wenn die konventionelle Rohrgeometrie (relativ großer Rohrdurchmesser und Rohrwandstärke zur Aufnahme einer Katalysatormenge und relativ hoher Prozessdruck) beibehalten wird. Der Wechsel zu einem geringeren Rohrdurchmesser würde die Kosten für die Rohre drastisch erhöhen. Daher besteht hier ein Bedarf nach Verbesserungen.

Generell sind Ausgestaltungen der vorliegenden Erfindung dabei nicht auf die Herstellung von Wasserstoff durch Dampfreformierung beschränkt, sondern auch in anderen, bei entsprechenden oder vergleichbar hohen Temperaturen durchgeführte katalytische Gasphasenreaktionen einsetzbar, wie weiter unten erläutert.

### Offenbarung der Erfindung

Vor diesem Hintergrund schlägt die vorliegende Erfindung ein Verfahren und eine Anlage zur Durchführung einer katalytischen Gasphasenreaktion, insbesondere einer Hochtemperaturreaktion zur Herstellung von Wasserstoff, insbesondere einer Dampfreformierung mit den Merkmalen der unabhängigen Patentansprüche vor. Ausgestaltungen sind Gegenstand der abhängigen Patentansprüche sowie der nachfolgenden Beschreibung.

Ausgestaltungen der vorliegenden Erfindung betreffen ein Konzept zur Vermeidung von Reaktionsrohren bei der Dampfreformierung oder einer anderen katalytischen Gasphasenreaktion der nachfolgend noch genauer erläuterten Art unter Verwendung von elektrischem Strom zur Beheizung. Wenngleich nachfolgend überwiegend von einer Dampfreformierung die Rede ist, ergeben sich die hierzu erläuterten Vorteile auch für die jeweils anderen Gasphasenreaktionen, so dass eine entsprechende Bezugnahme auf eine Dampfreformierung nur der Vereinfachung dient, jedoch den Gegenstand der Erfindung nicht einschränkt.

Hierbei kann insbesondere ein isolierter Druckbehälter verwendet werden, der vergleichbar zu einem in der autothermen Reformierung eingesetzten Druckbehälter aufgebaut und mit herkömmlichen Katalysatorpartikeln gefüllt sein kann, die eine entsprechende Reaktion katalysieren. Die Wärme wird unter Verwendung von elektrischen Heizelementen bereitgestellt, die in dem Druckbehälter aufgenommen sind. Der Druckbehälter wird insbesondere auf einem Druck in einem Bereich von 10 bis 100bar, weiter insbesondere 10 bis 70bar, beispielsweise 10 bis 50bar, betrieben. Bei höheren Drücken ergeben sich Vorteile gegenüber herkömmlichen Reformierverfahren, bei denen der Druck nicht über 35bar liegt.

Es wird dabei ein Verfahren zur Durchführung einer katalytischen Gasphasenreaktion, insbesondere einer Hochtemperaturreaktion zur Herstellung von Wasserstoff, insbesondere einer Dampfreformierung, vorgeschlagen, bei dem ein Prozessgas, insbesondere für die Dampfreformierung ein kohlenwasserstoff- und dampfhaltiges Prozessgas, durch einen Katalysereaktor geführt wird, wobei der Katalysereaktor einen Druckbehälter aufweist, in dem ein oder mehrere Katalysatorbetten angeordnet sind, wobei durch das eine Katalysatorbett oder durch zumindest eines der mehreren Katalysatorbetten ein oder mehrere Heizelemente geführt ist oder sind, das oder die elektrisch beheizt wird oder werden. Das Prozessgas kann beispielsweise auch Kohlendioxid enthalten. Dies ist insbesondere dann der Fall, wenn eine Synthesegasherstellung mit geringerem Verhältnis von Wasserstoff zu Kohlendioxid als bei der Dampfreformierung erfolgt. Je nach durchgeführter Reaktion können unterschiedliche Reaktanden im Prozessgas bereitgestellt sein.

Der Katalysereaktor ist insbesondere dadurch zur Durchführung der katalytischen Gasphasenreaktion eingerichtet, dass er einen hierfür geeigneten Katalysator aufweist, mit dem Prozessgas in einer geeigneten Zusammensetzung und mit einer geeigneten Temperatur beschickt wird, und dass er zur Beheizung auf eine geeignete Temperatur ausgebildet ist. Ferner ist ein entsprechender Katalysereaktor zur Durchströmung mit einer für die Durchführung der katalytischen Gasphasenreaktion geeigneten Strömungsgeschwindigkeit, Verweildauer und dergleichen ausgebildet. Hierzu sieht der Fachmann geeignete Steuer- bzw. Regelmittel vor und stützt sich auf einschlägige Fachliteratur. Sämtliche für Durchführung der katalytischen Gasphasenreaktion geeignete Katalysatoren und Reaktionsbedingungen können grundsätzlich auch im Rahmen von Ausgestaltungen der vorliegenden Erfindung eingesetzt werden.

In einer Ausgestaltung der vorliegenden Erfindung weist der Druckbehälter einen Innenraum mit einem kreisförmigen Querschnitt auf, dessen Durchmesser mehr als 1m, insbesondere mehr als 2m, mehr als 3m oder mehr als 5 m und insbesondere bis zu 10m beträgt, wobei das eine Katalysatorbett oder zumindest eines der mehreren Katalysatorbetten zumindest 50% des Querschnitts einnimmt. Der erfindungsgemäß vorgeschlagene Katalysereaktor grenzt sich dabei deutlich von herkömmlichen Katalysereaktoren ab, in denen in einem befeuerten Raum eine Vielzahl von Reaktionsrohren (Coils) angeordnet ist. Der Druckbehälter kann insbesondere einen zylindrischen Abschnitt aufweisen, auf welchen sich der erwähnte Querschnitt bezieht. Bei nichtzylindrischen Druckbehältern bezeichnet der Querschnitt die durchströmbare Fläche an der größten Stelle.

Insbesondere kann bzw. können das eine oder zumindest eines der mehreren Heizelemente stabförmig ausgebildet sein. Hierbei können grundsätzlich aus der Fachliteratur bekannte bzw. kommerziell verfügbare Heizstäbe eingesetzt werden, die sich für einen hier in Betracht kommenden Temperaturbereich eignen. Weitere Details zu entsprechenden Heizelementen sind unten erläutert.

In Ausgestaltungen der vorliegenden Erfindung kann bzw. können das eine oder zumindest eines der mehreren Heizelemente in einem Winkel von weniger als 10° oder in einem Winkel zwischen 80° und 100° gegenüber einer Längsachse des Druckbehälters ausgerichtet sein. Mit anderen Worten können sich die Heizelemente im Wesentlichen längs oder quer zur Längsachse erstrecken. Erstere Ausgestaltung bietet dabei den Vorteil, dass nur wenige lange Heizelemente bereitgestellt werden müssen, wodurch sich der Aufwand für die Bereitstellung und Kontaktierung mittels hochtemperaturfester Stromdurchführungen verringert. Letztere Ausgestaltung kann im Zusammenhang mit einer unterschiedlichen Beheizung längs des Katalysereaktors eingesetzt werden, wobei entsprechende Vorteile unten erläutert sind. Aber auch bei einer Längsanordnung, d.h. in ersterer Ausgestaltung, können mehrere sequentielle Abschnitte mit separaten, segmentierten oder unterschiedlich vielen Heizelementen ausgestattet werden, wodurch sich die Temperaturen in unterschiedlichen Abschnitten gezielt steuern lassen. Hierdurch lassen sich Verkokungen verringern oder vermeiden und eine Degradation des Katalysators bzw. der Heizelemente kann gezielt ausgeglichen werden.

Insbesondere können in Ausgestaltungen der vorliegenden Erfindung in dem Druckbehälter mehrere der Katalysatorbetten bereitgestellt und in einer Strömungsrichtung des Prozessgases hintereinander angeordnet sein, und es können mehrere der Heizelemente bereitgestellt sein. Hierbei kann bzw. können durch ein erstes Katalysatorbett der Katalysatorbetten oder durch eine erste Gruppe der Katalysatorbetten zumindest eines oder jeweils zumindest eines der Heizelemente geführt sein, wohingegen durch ein zweites Katalysatorbett der Katalysatorbetten oder eine zweite Gruppe der Katalysatorbetten keines oder jeweils keines der Heizelemente geführt sein können. Auf diese Weise können bestimmte Katalysatorbetten gezielt unbeheizt belassen werden, wodurch beispielsweise ein Vorreformierbett oder Zwischenbetten gebildet werden können, die jeweils zur Verhinderung oder Verringerung einer Verkokung dienen. Unterschiedliche Katalysatorbetten können dabei jeweils auch mit (in sich oder gegenüber anderen Katalysatorbetten) unterschiedlichen Katalysatoren, Katalysatorbeladungen oder Katalysatoraktivitäten ausgebildet sein und unterschiedliche Volumina aufweisen.

Die erste Gruppe der Katalysatorbetten und die zweite Gruppe der Katalysatorbetten können in einer Ausgestaltung der vorliegenden Erfindung Katalysatorbetten aufweisen, die alternierend zueinander in der Strömungsrichtung des Prozessgases hintereinander angeordnet sind. Auf diese Weise kann ggf. eine Verkokung besser verhindert werden, als wenn nur ein nicht beheiztes Katalysatorbett am Eintritt des Katalysereaktors bereitgestellt ist.

Im Rahmen von Ausgestaltungen der vorliegenden Erfindung können Stromführungsmittel bereitgestellt sein, die den Katalysator in zumindest einem der Katalysatorbetten abstützen. Auf diese Weise verringert sich der Aufwand für zusätzliche Abstützmittel in Form von Trägerelementen und dergleichen.

Das eine Heizelement oder zumindest eines der mehreren Heizelemente kann bzw. können in Ausgestaltungen der vorliegenden Erfindung in einem oder mehreren Schutzrohren angeordnet sein bzw. von einer oder mehreren Schutzschichten umgeben sein. Hierbei können unterschiedliche Arten der Realisierung gewählt werden, beispielsweise keramische Rohre, Beschichtungen, metallische Abstandshalter, Katalysator- oder inerte Keramikringe.

In Ausgestaltungen der vorliegenden Erfindung kann das eine Heizelement oder kann zumindest eines der mehreren Heizelemente ein hochtemperaturfestes Material, insbesondere eine (gesinterte) oxiddispersionsverfestigte Superlegierung, aufweisen, wie sie an sich aus dem Bereich der Hochtemperaturtechnik bekannt ist. Zu oxiddispersionsverfestigte Superlegierungen, die im Rahmen der vorliegenden Erfindung zum Einsatz kommen, sowie deren mögliche Komponenten und Ausgestaltungen, Basiswerkstoffe, zur Verfestigung einsetzbare Oxidpartikel und deren Grundelemente usw. sei auf einschlägige Fachliteratur verwiesen. Auch die Verwendung von Materialien wie Siliciumcarbid ist möglich.

In Ausgestaltungen der Erfindung kann beispielsweise ein pulvermetallurgisch hergestellte, dispersionsverfestigte, ferritische Eisen-Chrom-Aluminium-Legierung, die sich für den Einsatz bei Temperaturen bis zu 1.425°C eignet, eingesetzt werden. Eine derartige Legierung zeichnet sich durch außergewöhnlich gute Formstabilität und Oxidationsbeständigkeit aus.

Das Prozessgas kann im Rahmen der vorliegenden Erfindung auf einer Einspeisetemperatur in einem Bereich von 500 bis 700°C, beispielsweise ca. 550°C, in den Katalysereaktor eingespeist werden, und die elektrische Beheizung kann derart vorgenommen werden, dass das Prozessgas auf einer Entnahmetemperatur in einem Bereich von 800 bis 1.050°C, beispielsweise ca. 850°C, aus dem Katalysereaktor ausströmt. Die vorliegende Erfindung ermöglicht auch bei derartigen Temperaturen eine verbesserte elektrische Beheizung. Eine Einspeisetemperatur kann auch bei 350 bis 500°C liegen, wodurch eine Rauchgasüberhitzung eingespart werden kann.

Ausgestaltungen der vorliegenden Erfindung umfassen, dass mehrere der Heizelemente bereitgestellt sind, die zumindest zum Teil auf unterschiedliche Temperaturen beheizt werden. Auf diese Weise kann eine graduelle Abstufung der Beheizung geschaffen werden. Insbesondere ist es auf diese Weise auch möglich, bestimmte Heizelemente, beispielsweise solche, die auf Temperaturen unterhalb von 650°C betrieben werden, mit weniger temperaturfesten, und damit kostengünstigeren und einfacher zu verarbeitenden Materialien auszubilden, elektrisch zu kontaktieren, abzustützen oder zu schützen.

Für die Bestromung unterschiedlicher Heizelemente oder Gruppen von Heizelementen können in Ausgestaltungen der vorliegenden Erfindung unterschiedliche Stromquellen, Stromwandler, Netze, Generatoren oder dergleichen eingesetzt werden. Es können aber auch alle Heizelemente gemeinsam bestromt werden.

Der in einem entsprechenden Verfahren eingesetzte Katalysereaktor kann in Ausgestaltungen der vorliegenden Erfindung auch einer von mehreren, gleichartig aufgebauten und seriell angeordneten Katalysereaktoren sein. Auch eine Hintereinander- bzw. Parallelschaltung von elektrisch beheizten Katalysereaktoren, wie sie die vorliegende Erfindung in ihren Ausgestaltungen vorschlägt, und konventionellen Katalysereaktoren bzw. Reaktoren zur autothermen Reformierung und/oder partiellen Oxidation beliebiger Art ist möglich.

Wie erwähnt, eignet sich die vorliegende Erfindung insbesondere zur Durchführung einer Dampfreformierung, die mit oder ohne Einsatz von Kohlendioxid durchgeführt werden kann. Die Gasphasenreaktion kann jedoch auch eine andere endotherme Hochtemperaturreaktion sein, und beispielsweise das sogenannte Ammoniakcracking oder eine reverse Wassergasshift umfassen. Auch Dehydrierungsreaktionen wie eine Propandehydrierung, eine Butandehydrierung, eine Butendehydrierung oder eine Ethylbenzoldehydrierung können entsprechende Gasphasenreaktionen darstellen. In jedem Fall umfasst das Prozessgas bei der Einspeisung in den Katalysereaktor zumindest einige Reaktanden für eine entsprechende Reaktion, beispielsweise ausgewählt aus Dampf, Kohlendioxid, Kohlenwasserstoffen und Ammoniak.

Der vorgeschlagene Katalysereaktor ist zur Durchführung einer katalytischen Gasphasenreaktion, insbesondere einer Hochtemperaturreaktion zur Herstellung von Wasserstoff, insbesondere einer Dampfreformierung, umfassend eine Umsetzung eines durch den Katalysereaktor geführten Prozessgases; eingerichtet, wobei der Katalysereaktor und einen Druckbehälter aufweist, in dem ein oder mehrere Katalysatorbetten angeordnet sind, wobei durch das eine Katalysatorbett oder durch zumindest eines der mehreren Katalysatorbetten ein oder mehrere Heizelemente geführt ist oder sind, das oder die zur elektrischen Beheizung eingerichtet ist oder sind.

Zu weiteren Merkmalen und Vorteilen eines entsprechenden Katalysereaktors und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für einen Katalysereaktor, der gemäß einer Ausgestaltung der Erfindung dazu eingerichtet ist, ein Verfahren gemäß einer beliebigen Ausgestaltung der vorliegenden Erfindung durchzuführen.

### Kurze Beschreibung der Zeichnung

Ausführungsformen der Erfindung werden nachfolgend rein beispielhaft unter Bezugnahme auf die beigefügte Zeichnung beschrieben, wobei
Figur 1 einen Katalysereaktor gemäß einer ersten Ausgestaltung der vorliegenden Erfindung veranschaulicht, und
Figur 2 einen Katalysereaktor gemäß einer zweiten Ausgestaltung der vorliegenden Erfindung veranschaulicht.

### Ausführungsformen der Erfindung

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

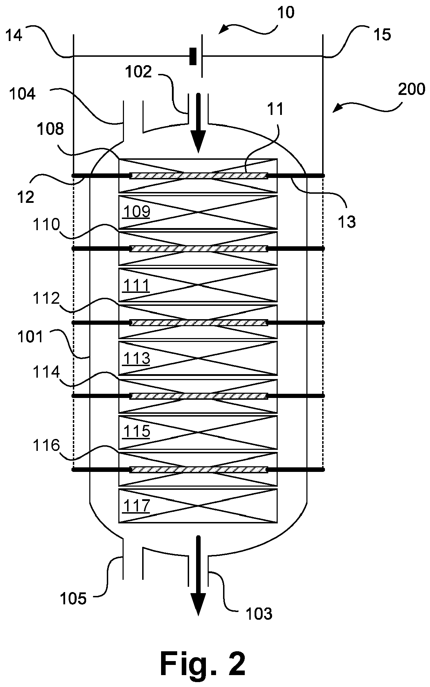

In den Figuren 1 und 2 sind Katalysereaktoren gemäß Ausgestaltungen der Erfindung veranschaulicht und mit 100 bzw. 200 bezeichnet. Diese weisen jeweils einen Druckbehälter auf, der durch eine Behälterwand 101 definiert ist.

Erneut wird nachfolgend auf eine Dampfreformierung Bezug genommen, wobei die entsprechenden Erläuterungen jedoch nicht einschränkend zu verstehen sind.

Wie insoweit für entsprechende Druckbehälter üblich, kann dabei jeweils ein zylindrischer Abschnitt vorgesehen sein, an dessen beiden Enden sich kalottenförmige oder halbkugelige Endkappen anschließen. Diese Abschnitte sind in den Figuren 1 und 2 jeweils nicht gesondert bezeichnet.

In die Druckbehälter münden jeweils ein Gaseinlass 102 und ein Gasauslass 103, die jeweils an den apikalen Punkten der kalottenförmigen oder halbkugeligen Endkappen angeordnet sein können. Die Strömungsrichtung eines kohlenwasserstoff- und dampfhaltigen Prozessgases, das in die Reaktoren 100, 200 über die jeweiligen Gaseinlässe 102 eintritt und mit einer Temperatur im oben erläuterten Bereich die Katalysereaktoren 100, 200 über die jeweiligen Gasauslässe 103 verlässt, ist dabei jeweils mit fetten Pfeilen veranschaulicht.

Über beispielsweise nach Art eines Mannlochs ausgebildete, im Betrieb verschlossenen Einfüllöffnungen 104 kann jeweils ein Katalysator in die Katalysereaktoren 100, 200 eingefüllt werden. Dieser kann, beispielsweise zum Austausch oder zur externen Regeneration, jeweils über im Betrieb geschlossene Entnahmeöffnungen 104 den Katalysereaktoren 100, 200 entnommen werden.

Die Katalysereaktoren 100, 200 sind jeweils zur elektrischen Beheizung ausgebildet und dazu mit einer oder mehreren Stromversorgungseinheiten 10 versehen. Die Art der Stromversorgung ist dabei beliebig und kann beispielsweise über einen Transformator, Gleichrichter oder dergleichen aus einem Stromnetz oder einem Generator erfolgen. Die Beheizung erfolgt mittels schraffiert veranschaulichter und jeweils an einer Stelle mit 11 bezeichneter Heizelemente, die insbesondere als Heizstäbe der zuvor erwähnten Art ausgebildet sein können.

Die Heizelemente 11 werden dabei über insbesondere hochtemperaturfeste Stromdurchführungen 12, 13 durch die Behälterwand 101 kontaktiert (in Figur 2 nicht an jede Stelle gesondert bezeichnet, jedoch stets mit fetten Linien veranschaulicht). Weitere Stromverbindungen sind mit 14 und 15 bezeichnet. Die Darstellung ist dabei stark vereinfacht. Insbesondere können unterschiedliche Gruppen von Heizelementen 11 oder unterschiedliche Heizelemente 11 aus unterschiedlichen Stromquellen mit gleichen oder unterschiedlichen Strömen gespeist werden. Zumindest ein stromführendes Element kann dabei zugleich als Katalysatorträger genutzt werden.

Diese längsangeströmten Einheiten können auch hintereinander geschaltet werden. Elektrisch können einzelne Elemente in Serie geschaltet werden. Der Spannungsbereich kann sowohl Niederspannung aber auch Mittelspannung sein. Im Teillastbetrieb können einzelne Elemente (Heizelemente oder Heizpakete in Serie) ausgeschaltet sein oder in der Spannung reduziert werden.

Unterschiede zwischen den in Figuren 1 und 2 veranschaulichten Ausgestaltungen der Erfindung, d.h. den Katalysereaktoren 100, 200, ergeben sich insbesondere in der Art, Anzahl, Anordnung und Erwärmung der Katalysatorbetten, die in Figur 1 mit 106 und 107 und in Figur 2 mit 108 bis 117 bezeichnet sind.

In dem in Figur 1 veranschaulichten Katalysereaktor 100 ist ein Katalysatorvorbett 106, das insbesondere nicht gesondert elektrisch beheizt wird, stromauf eines Katalysatorhauptbetts 107, das aber auch seinerseits in unterschiedliche Teilbetten unterteilt sein kann und mittels mehrerer, hier parallel zur Strömungsrichtung des Prozessgases veranschaulichter Heizelemente 11 beheizt wird, angeordnet. Durch die Verwendung des Katalysatorvorbetts kann eine Verkokung verringert werden.

Die Reaktorwand kann insbesondere thermisch isoliert sein bzw. eine entsprechende Auskleidung aufweisen, so dass der Druckbehälter unterhalb der Reaktionstemperaturen bleibt. Dies ermöglicht eine kostengünstigere Materialwahl und Fertigung. Eine Auskleidung kann beispielsweise durch eine Ausmauerung erfolgen. Zudem kann Behälterwand durch ein Gas oder Kühlwasser gekühlt werden, wie jedoch aus Gründen der Übersichtlichkeit nicht gesondert gezeigt.

In dem in Figur 2 veranschaulichten Katalysereaktor 200 sind die Katalysatorbetten 108 bis 117 nacheinander in Strömungsrichtung in dem Katalysereaktor 200 angeordnet. Diese werden alternierend mit Heizelementen 101 beheizt, wobei Anzahl, Größe, und jeweils vorgenommene Beheizung oder Nichtbeheizung durch das hier veranschaulichte Ausführungsbeispiel nicht festgelegt sind.

Auf diese Weise kann, mit den zuvor erläuterten Vorteilen, eine abgestufte Beheizung des Katalysereaktors 200 erzielt werden, wobei sämtliche Heizelemente 101 an eine Stromquelle oder an unterschiedliche Stromquellen angeschlossen werden können, wie mit punktierten Linien veranschaulicht, und beispielsweise mit unterschiedlichen Spannungen beaufschlagbar sind. Vorteil dieser Variante ist eine Queranströmung der Heizelemente, was zu wesentlich höheren Wärmeübertragungen führt.

Supportstrukturen, die dafür vorgesehen sind, den Katalysator zu tragen, ist nicht gezeigt, aber z.B. von Reaktoren zur autothermen Reformierung bekannt.

## Patentansprüche

1. Verfahren zur Durchführung einer katalytischen Gasphasenreaktion, bei dem ein Prozessgas durch einen Katalysereaktor (100, 200) geführt wird, wobei der Katalysereaktor (100, 200) einen Druckbehälter (101) aufweist, in dem ein oder mehrere Katalysatorbetten (106-117) angeordnet sind, wobei durch das eine Katalysatorbett (106-117) oder durch zumindest eines der mehreren Katalysatorbetten (106-111) ein oder mehrere Heizelemente (11) geführt ist oder sind, das oder die elektrisch beheizt wird oder werden.

2. Verfahren nach Anspruch 1, bei dem der Druckbehälter (101) einen Innenraum mit einem kreisförmigen Querschnitt aufweist, dessen Durchmesser zwischen 1m und 10m liegt, wobei das eine Katalysatorbett (106-111) oder zumindest eines der mehreren Katalysatorbetten (106-111) zumindest 50% des Querschnitts einnimmt.

3. Verfahren nach Anspruch 1 oder 2, bei dem das eine oder zumindest eines der mehreren Heizelemente (11) stabförmig ausgebildet ist.

4. Verfahren nach einem der vorstehenden Ansprüche, bei dem das eine oder zumindest eines die mehreren Heizelemente (11) in einem Winkel von weniger als 10° oder in einem Winkel zwischen 80° und 100° gegenüber einer Längsachse des Druckbehälters ausgerichtet ist.

5. Verfahren nach einem der vorstehenden Ansprüche, bei dem in dem Druckbehälter (101) mehrere der Katalysatorbetten (106-117) bereitgestellt und in einer Strömungsrichtung des Prozessgases hintereinander angeordnet sind, und bei dem mehrere der Heizelemente (11) bereitgestellt sind, wobei durch ein erstes Katalysatorbett (107) der Katalysatorbetten (106-117) oder durch eine erste Gruppe der Katalysatorbetten (108, 110, 112, 114, 116) zumindest eines oder jeweils zumindest eines der Heizelemente (11) geführt ist, und wobei durch ein zweites Katalysatorbett (106) der Katalysatorbetten (106-117) oder eine zweite Gruppe der Katalysatorbetten (109, 111, 113, 115, 117) keines oder jeweils keines der Heizelemente (11) geführt ist.

6. Verfahren nach Anspruch 5, bei denen die erste Gruppe der Katalysatorbetten (108, 110, 112, 114, 116) und die zweite Gruppe der Katalysatorbetten (109, 111, 113, 115, 117) Katalysatorbetten (108-117) aufweisen, die alternierend zueinander in der Strömungsrichtung des Prozessgases hintereinander angeordnet sind.

7. Verfahren nach Anspruch 5 oder 6, bei dem die mehreren Katalysatorbetten (106-117) ein Vorreformierbett umfassen.

8. Verfahren nach einem der Ansprüche 5 bis 7, bei dem Stromführungsmittel bereitgestellt sind, die den Katalysator in zumindest einem der Katalysatorbetten (106-117) abstützen.

9. Verfahren nach einem der vorstehenden Ansprüche, bei dem das eine Heizelement (11) oder zumindest eines der mehreren Heizelemente (11) in einem oder mehreren Schutzrohren angeordnet ist.

10. Verfahren nach einem der vorstehenden Ansprüche, bei dem das eine Heizelement (11) oder zumindest eines der mehreren Heizelemente (11) ein hochtemperaturfestes Material, insbesondere eine oxiddispersionsverfestigte Superlegierung und/oder Siliciumcarbid, aufweist.

11. Verfahren nach einem der vorstehenden Ansprüche, bei dem das Prozessgas auf einer Einspeisetemperatur in einem Bereich von 500 oder 350 bis 700°C in den Katalysereaktor (100, 200) eingespeist wird und die elektrische Beheizung derart vorgenommen wird, dass das Prozessgas auf einer Entnahmetemperatur in einem Bereich von 800 bis 1.050°C aus dem Katalysereaktor (100, 200) ausströmt.

12. Verfahren nach einem der vorstehenden Ansprüche, bei dem mehrere der Heizelemente (11) bereitgestellt sind, die zumindest zum Teil auf unterschiedliche Temperaturen beheizt werden und/oder bei dem der Katalysereaktor (100, 200) einer von mehreren, gleichartig aufgebauten und seriell angeordneten Katalysereaktoren ist.

13. Verfahren nach einem der vorstehenden Ansprüche, bei dem die Dampfreformierung aus einer Dampfreformierung mit oder ohne Einsatz von Kohlendioxid oder einer anderen endothermen Hochtemperaturreaktion umfassend ein Ammoniakcracking, eine reverse Wassergasshift, eine Propandehydrierung, eine Butandehydrierung, eine Butendehydrierung und/oder eine Ethylbenzoldehydrierung, ausgewählt ist.

14. Katalysereaktor (100, 200), der zur Durchführung einer katalytischen Gasphasenreaktion, umfassend eine Umsetzung eines durch den Katalysereaktor (100, 200) geführten Prozessgases, eingerichtet ist, wobei der Katalysereaktor (100, 200) und einen Druckbehälter (101) aufweist, in dem ein oder mehrere Katalysatorbetten (106-117) angeordnet sind, wobei durch das eine Katalysatorbett (106-117) oder durch zumindest eines der mehreren Katalysatorbetten (106-111) ein oder mehrere Heizelemente (11) geführt ist oder sind, das oder die zur elektrischen Beheizung eingerichtet ist oder sind.

15. Katalysereaktor (100, 200) nach Anspruch 14, der zur Durchführung eines Verfahrens nach einem der Ansprüche 1 bis 13 eingerichtet ist.
